Europäisches Patentamt

European Patent Office

Office européen des brevets

(19)

(11) Veröffentlichungsnummer: **0 504 624 A2**

## (12) EUROPÄISCHE PATENTANMELDUNG

(21) Anmeldenummer: **92103120.9**

(22) Anmeldetag: **25.02.92**

(51) Int. Cl.5: **F16F  9/46**

(30) Priorität: **22.03.91 DE 4109471**

(43) Veröffentlichungstag der Anmeldung:
**23.09.92 Patentblatt  92/39**

(84) Benannte Vertragsstaaten:
**DE ES FR GB IT**

(71) Anmelder: **ROBERT BOSCH GMBH**
**Postfach 30 02 20**
**W-7000 Stuttgart 30(DE)**

(72) Erfinder: **Marquardt, Werner-Karl, Dipl.-Ing.**
**Primelweg 30**
**W-7145 Markgröningen(DE)**
Erfinder: **Tischer, Michael, Dipl.-Ing. (FH)**
**Schillerstrasse 14**
**W-7101 Abstatt(DE)**
Erfinder: **Spiess, Ewald, Dipl.-Ing. (FH)**
**Ginsterweg 3**
**W-7143 Vaihingen/Enz 2(DE)**

(54) **Stossdämpfer.**

(57) Bei einem bereits bekannten Stoßdämpfer sind am Kolben steuerbare Ventile vorgesehen, wobei zum Öffnen dieser Ventile zunächst die Kraft einer Feder überwunden werden muß. Deshalb sind bei diesem bekannten Stoßdämpfer nicht beliebig niedrige Dämpfungskräfte erzeugbar.

Bei dem vorgeschlagenen Stoßdämpfer ist in der Ventileinrichtung (24) ein zusätzlicher Strömungsweg (106) gebildet, wobei durch Verringerung einer Stellkraft (102) der zusätzliche Strömungsweg (106) zu öffnen ist. Auf diese Weise lassen sich die erzielbaren Dämpfungskräfte sehr weit absenken.

Der Stoßdämpfer dient zur Dämpfung von Relativbewegungen zweier Massen und ist zur Anwendung bestimmt bei federnden Radaufhängungssystemen von Fahrzeugen.

FIG.1

EP 0 504 624 A2

## Stand der Technik

Die Erfindung geht aus von einem Stoßdämpfer nach der Gattung des Hauptanspruchs.

Es ist bereits ein Stoßdämpfer bekannt, dessen Dämpfung bzw. Dämpfungskraft mittels einer elektromagnetisch betätigbaren Ventileinrichtung steuerbar ist. Die Ventileinrichtung umfaßt einen Steuerkörper, welcher von einer Stellkraft gegen einen Ventilsitz verstellbar ist. Je nach Stärke der Stellkraft wird ein Druck in dem anströmenden Druckmedium erzeugt und damit die Dämpfungskraft des Stoßdämpfers gesteuert.

Bei dem bekannten Stoßdämpfer wird mit Hilfe des von dem Steuerkörper erzeugten Druckes ein Ventilkörper gesteuert. Der Ventilkörper wird zum einen von dem durch den Steuerkörper angedrosselten Druck gesteuert und zum anderen von einem federnden Element in schließender Richtung beaufschlagt. Wegen diesem federnden Element ist ein Mindestdruck erforderlich, um den Strömungsdurchlaß zu öffnen. Aus funktionalen Gründen kann das federnede Element nicht unbegrenzt schwach ausgeführt sein. Dies hat zur Folge, daß die Dämpfungskraft des bekannten Stoßdämpfers nicht beliebig abgesenkt werden kann.

## Vorteile der Erfindung

Demgegenüber weist der mit den kennzeichnenden Merkmalen des Hauptanspruchs ausgestattete Stoßdämpfer den Vorteil auf, daß die Dämpfungskraft des Stoßdämpfers sehr weit abgesenkt werden kann.

Durch die in den Unteransprüchen aufgeführten Maßnahmen sind vorteilhafte Weiterbildungen und Verbesserungen des im Hauptanspruch angegebenen Stoßdämpfers möglich.

Die erzielbare, minimale Dämpfungskraft des Stoßdämpfers ist vorteilhafterweise unabhängig von dem den Ventilkörper in schließender Richtung beaufschlagenden federnden Element.

## Zeichnung

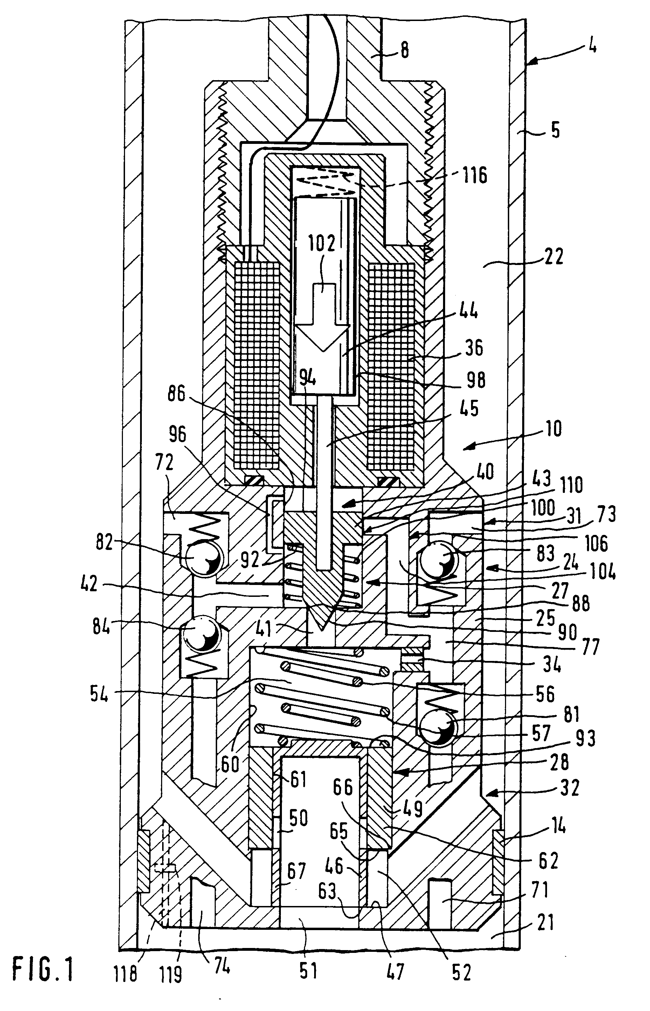

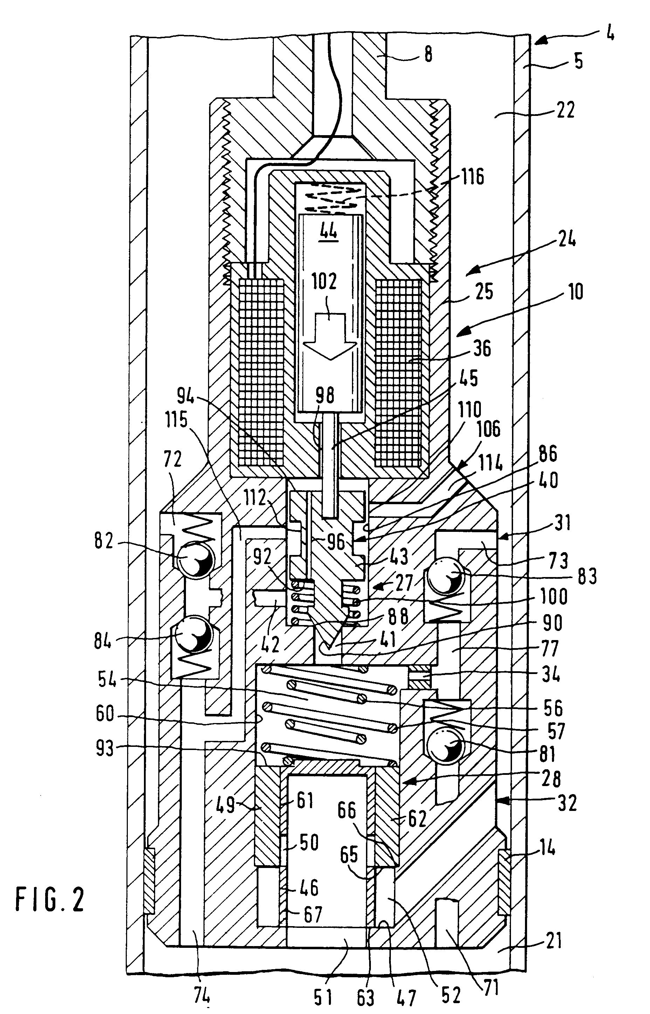

Ausfünrungsbeispiele der Erfindung sind in der Zeichnung vereinfacht dargestellt und in der nachfolgenden Beschreibung anhand der Zeichnung näher erläutert. Die Figuren 1 und 2 zeigen je ein ausgewähltes, vorteilhaftes Ausführungsbeispiel des Stoßdämpfers.

## Beschreibung der Ausführungsbeispiele

Für den erfindungsgemäßen Stoßdämpfer gibt es mehrere Ausführungsformen, wobei nachfolgend zwei der möglichen Ausführungsformen beispielhaft beschrieben sind.

Bei dem in der Figur 1 dargestellten Ausführungsbeispiel hat der Stoßdämpfer einen Zylinder 4 mit einem abschnittsweise dargestellten, zylindrischen Mantelrohr 5 mit zwei nicht dargestellten Stirnseiten. Die eine Stirnseite ist z. B. an einem in der Zeichnung nicht sichtbaren Radträger oder an einem ebenfalls nicht sichtbaren Fahrzeugaufbau befestigt; auf der anderen Stirnseite des Mantelrohres 5 ragt eine Kolbenstange 8 heraus. Von der Kolbenstange 8 sind nur ein Ende dargestellt. Die Kolbenstange 8 ist mit diesem Ende mit einem abgestuften, zylindrischen Kolben 10 verbunden und mit einem anderen, nicht dargestellten Ende ist sie entsprechend an dem Radträger oder dem Fahrzeugaufbau angelenkt. Der Kolben 10 kann unter Zwischenlage eines Führungsringes 14 an einer inneren Mantelfläche des Mantelrohres 5 axial gleiten. Der Führungsring 14 hat gleichzeitig die Aufgabe einer Dichtung.

Ein Innenraum des Mantelrohres 5 wird durch den Kolben 10 in einen ersten Arbeitsraum 21 und in einen zweiten Arbeitsraum 22 unterteilt. In der Zeichnung befindet sich der erste Arbeitsraum 21 unterhalb und der zweite Arbeitsraum 22 oberhalb des Kolbens 10.

In den Kolben 10 ist eine ansteuerbare Ventileinrichtung 24 integriert. Die Ventileinrichtung 24 steuert die Dämpfungskraft des Stoßdämpfers.

Die Ventileinrichtung 24 besteht im wesentlichen aus einem Gehäuse 25 mit einem Ventil 27, einem zweiten Ventil 28, einer Strömungsverbindung 31, einer zweiten Strömungsverbindung 32 und einer Engstelle 34. Die Engstelle 34 ist z. B. eine Strömungsblende. Beide Strömungsverbindungen 31, 32 verbinden die beiden Arbeitsräume 21, 22. Die Strömungsverbindung 31 führt im wesentlichen durch das Ventil 27, und die zweite Strömungsverbindung 32 führt durch das zweite Ventil 28. Ein zwischen den beiden Arbeitsräumen 21, 22 sich austauschender Druckmedium-Strom wird in Teilströme unterteilt. Der erste Teilstrom fließt durch die Strömungsverbindung 31, und der zweite Teilstrom fließt durch die zweite Strömungsverbindung 32. Das Ventil 27 besteht im wesentlichen aus einer Magnetspule 36, einem Steuerkörper 40, einem ersten Druckanschluß 41 und aus einem zweiten Druckanschluß 42. In dem dargestellten Ausführungsbeispiel setzt sich der Steuerkörper 40 zusammen aus einem Kolben 43, einem Anker 44 und einem Stift 45. Der Stift 45 verbindet den Kolben 43 mit dem Anker 44. Der Kolben 43, der Anker 44 und der Stift 45 können fest zusammengefügt sein oder lose aneinander liegen. Der Steuerkörper 40 kann aber auch zum Beispiel aus einem einzigen Stück bestehen.

Das zweite Ventil 28 enthält im wesentlichen einen inneren Ventilkörper 46, einen an dem Gehäuse 25 vorgesehenen Ventilsitz 47, einen äußeren Ventilkörper 49, eine Ventilöffnung 50 oder mehrere Ventilöffnungen 50, eine erste Druckkammer 51, eine zweite Druckkammer 52, einen Druckraum 54, ein inneres federndes Element 56 und ein äußeres federndes Element 57. Die Elemente 56 und 57 sind in dem Druckraum 54 vorgesehen. Der äußere Ventilkörper 49 ist in einer Bohrung 60 des Gehäuses 25 verschiebbar angeordnet. Er hat eine rohrartige Gestalt mit einer Längsbohrung 61 und einer Wandung 62. Der innere Ventilkörper 46 ist innerhalb der Längsbohrung 61 verschiebbar geführt. Das innere federnde Element 56 kann auf den inneren Ventilkörper 46 wirken und dadurch eine dem Ventilsitz 47 zugewandte Stirnseite 63 des inneren Kolbens 46 in Richtung auf den Ventilsitz 47 drücken. Das äußere federnde Element 57 kann auf den äußeren Ventilkörper 49 in axialer Richtung drücken, mit dem Bestreben eine Stirnseite 65 der Wandung 62 des äußeren Ventilkörpers 49 gegen einen Absatz 66 der Bohrung 60 zu drücken. In einer Wandung 67 des inneren Ventilkörpers 46 sind die Ventilöffnungen 50 vorgesehen. Eine Verbindung zwischen den Druckkammern 51 und 52 kann nicht nur durch die Ventilöffnungen 50 bestehen, sondern, je nach Lage des inneren Ventilkörpers 46, auch zwischen der Stirnseite 63 und dem Ventilsitz 47. Die Verbindung durch die Ventilöffnungen 50 ist je nach Lage des äußeren Ventilkörpers 49 relativ zu dem inneren Ventilkörper 46 mehr oder weniger geöffnet.

Die Strömungsverbindung 31 führt durch die beiden Druckanschlüsse 41 und 42 des Ventils 27 und unterteilt sich im wesentlichen in vier Kanäle 71, 72, 73, 74. Der erste Kanal 71 führt aus dem ersten Arbeitsraum 21 zu der Engstelle 34. Im erstem Kanal 71, zwischen dem ersten Arbeitsraum 21 und der Engstelle 34, ist ein erstes Rückschlagventil 81 vorgesehen. Dieses erste Rückschlagventil 81 ist so angeordnet, daß das Druckmedium nur aus dem ersten Arbeitsraum 21 in Richtung der Engstelle 34, aber nicht in umgekehrter Richtung strömen kann. Von der Engstelle 34 führt die Strömungsverbindung 31 weiter in den Druckraum 54. Der Druckraum 54 ist mit dem ersten Druckanschluß 41 des Ventils 27 wirkverbunden. Je nach Stellung des Steuerkörpers 40 besteht eine mehr oder weniger große Verbindung zwischen dem ersten Druckanschluß 41 und dem zweiten Druckanschluß 42. Von dem zweiten Druckanschluß 42 führt der zweite Kanal 72 in den zweiten Arbeitsraum 22. Zwischen dem zweiten Druckanschluß 42 und dem zweiten Arbeitsraum 22 ist in dem zweiten Kanal 72 ein zweites Rückschlagventil 82 angeordnet. Dieses zweite Rückschlagventil 82 ist so eingebaut, daß das Druckmedium aus dem zweiten Druckanschluß 42 in den zweiten Arbeitsraum 22 strömen kann, aber in umgekehrter Richtung ist der Weg für das Druckmedium versperrt. Der dritte Kanal 73 führt aus dem zweiten Arbeitsraum 22 zu der Strömungsblende 34. In dem dritten Kanal 73 ist zwischen dem zweiten Arbeitsraum 22 und der Strömungsblende 34 ein drittes Rückschlagventil 83 eingebaut. Dieses Rückschlagventil 83 ist so vorgesehen, daß das Druckmedium aus dem zweiten Arbeitsraum 22 in Richtung auf die Strömungsblende 34 strömen kann, aber der Weg in umgekehrter Richtung ist versperrt. Die Kanäle 71, 73 vereinigen sich auf der Abströmseite der Rückschlagventile 81, 83 in einem Kanal 77. Der Kanal 77 führt zu der Engstelle 34. Von dort geht es in den Druckraum 54. Von dem zweiten Druckanschluß 42 führt ein vierter Kanal 74 in den ersten Arbeitsraum 21. In dem vierten Kanal 74 ist ein viertes Rückschlagventil 84 vorgesehen, welches das Druckmedium nur aus dem zweiten Druckanschluß 42 durch den vierten Kanal 74 in den ersten Arbeitsraum 21 strömen läßt. Stromaufwärts der beiden Rückschlagventile 82, 84 sind die beiden Kanäle 72, 74 teilweise in einem gemeinsamen Kanal zusammengeführt und mit dem zweiten Druckanschluß 42 verbunden.

Das Gehäuse 25 besitzt eine Bohrung 86. Der Steuerkörper 40 ist in dem Gehäuse 25 axial verschiebbar gelagert. Der Kolben 43 des Steuerkörpers 40 wird in der Bohrung 86 geführt. An dem Gehäuse 25 ist ein Anschlag 88 vorgesehen. Der Steuerkörper 40 besitzt eine Stirnseite 90, eine radial verlaufende Abstufung 92 und eine radial verlaufende Abstufung 94. Eine Magnetkraft der Magnetspule 36 wirkt auf den Anker 44 und damit auf den Steuerkörper 40 mit dem Bestreben, den Steuerkörper 40 gegen den Anschlag 88 zu betätigen. Die Stirnseite 90 ist dem ersten Druckanschluß 41 zugewandt und wird von dem im ersten Druckanschluß 41 herrschenden Druck beaufschlagt. Der übrige Teil des Steuerkörpers 40 ist vom im zweiten Druckanschluß 42 herrschenden Druck umgeben. Eine Verbindungsbohrung 96 sorgt dafür, daß auf die beiden radial verlaufenden Abstufungen 92, 94 der Druck des zweiten Druckanschlusses 42 wirkt. Ein Spiel 98 zwischen dem Stift 45 und dem Gehäuse 25 bzw. zwischen dem Anker 44 und dem Gehäuse 25 ermöglicht einen Druckausgleich im Bereich des Stiftes 45 und des Ankers 44. Im Bereich des zweiten Druckanschlusses 42 ist eine Feder 100 vorgesehen. Die Feder 100 wirkt einerseits auf das Gehäuse 25 und andererseits auf den Steuerkörper 40 mit dem Bestreben, den Steuerkörper 40 von dem Anschlag 88 abzuheben.

Der Steuerkörper 40 ist im Bereich der Stirnseite 90 mit einer Kegelspitze versehen und zwar so, daß ein Teil der Kegelspitze in den Bereich des Druckanschlusses 41 hineinragen kann, damit der Anschlag 88 im Bereich der Kegelspitze abdichten kann. Die Stirnseite 90 entspricht einer zum Erzeugen einer Kraft in öffnender Richtung hydraulisch wirksamen Flache. Eine Magnetkraft der Magnetspule 36 wirkt auf den Anker 44 und damit auf den Steuerkörper 40 in Richtung auf den Anschlag 88, das heißt, in Schließrichtung. Die Magnetkraft der Magnetspule 36 abzüglich der Kraft der Feder 100 ergeben eine Stellkraft 102. Ist die Magnetkraft größer als die Kraft der Feder 100, dann wirkt die Stellkraft 102 in schließender Richtung. Ist die Magnetkraft kleiner als die Kraft der Feder 100, so wirkt die Stellkraft 102 in öffnender Richtung der Strömungsverbindung 31. Die Stellkraft 102 ist in der Zeichnung durch einen Pfeil mit dem Bezugszeichen 102 symbolhaft dargestellt und zwar richtungsmäßig für den Fall, daß die Magnetkraft größer sei als die Kraft der Feder 100. Je größer die Stellkraft 102, desto stärker wird der Steuerkörper 40 in Richtung des Anschlags 88 gedrückt. Je nach Lage des Steuerkörpers 40 relativ zu dem Anschlag 88 ist die Verbindung zwischen den beiden Druckanschlüssen 41, 42 mehr oder weniger geöffnet. Der Druck im ersten Druckanschluß 41 beaufschlagt den Steuerkörper 40 in öffnender Richtung.

Die Stirnfläche der Abstufung 92 ist dem Anschlag 88 zugewandt, und die Stirnfläche der Abstufung 94 ist dem Anschlag 88 abgewandt. Der Kolben 43 ist im Bereich zwischen den Abstufungen 92, 94 mit engem Spiel in die Bohrung 86 eingepaßt. Druckausgleich des Druckes, der beiderseits der Abstufungen 92, 94 wirkt, erfolgt im wesentlichen nur über die Verbindungsbohrung 96.

Falls eine Druckdifferenz zwischen einem Druck in dem ersten Arbeitsraum 21 und einem Druck in dem zweiten Arbeitsraum 22 besteht, dann versucht das Druckmedium durch die Ventileinrichtung 24 von einem Arbeitsraum 21, 22 in den jeweils anderen Arbeitsraum zu gelangen. Die Druckdifferenz kann z. B. bei Relativbewegung zwischen dem Kolben 10 und dem Mantelrohr 5 entstehen.

Ist der Druck in dem ersten Arbeitsraum 21 größer als in dem zweiten Arbeitsraum 22, dann versucht das Druckmedium durch den ersten Kanal 71, über das erste Rückschlagventil 81, durch die Engstelle 34 zu dem ersten Druckanschluß 41 zu gelangen. Dadurch entsteht in dem ersten Druckanschluß 41 ein Druck, welcher gegen die Stirnseite 90 des Steuerkörpers 40 drückt. Ist die dadurch hervorgerufene Kraft größer als die Stellkraft 102, dann hebt der Steuerkörper 40 von dem Ventilsitz 92 ab, und das Druckmedium kann weiter in den zweiten Druckanschluß 42 fließen, von wo es dann durch den zweiten Kanal 72 und über das zweite Rückschlagventil 82 in den zweiten Arbeitsraum 22 strömt. Ist der Druck in dem zweiten Arbeitsraum 22 größer als in dem ersten Arbeitsraum 21, dann versucht das Druckmedium durch den dritten Kanal 73 über das dritte Rückschlagventil 83 und durch die Engstelle 34 zu dem ersten Druckanschluß 41 zu strömen. Der Druck in dem ersten Druckanschluß 41 erzeugt auch in diesem Fall eine der Stellkraft 102 entgegengerichtete Kraft, welche bestrebt ist, den Steuerkörper 40 vom Anschlag 88 abzuheben. Ist diese Kraft größer als die Stellkraft 102, so kann das Druckmedium aus dem ersten Druckanschluß 41 in den zweiten Druckanschluß 42 und von dort durch den vierten Kanal 74 und über das vierte Rückschlagventil 84 in den ersten Arbeitsraum 21 strömen.

Unabhängig davon, ob der Druck in dem ersten Arbeitsraum 21 höher ist als der Druck in dem zweiten Arbeitsraum 22 oder ob der Druck in dem zweiten Arbeitsraum 22 höher ist als in dem ersten Arbeitsraum 21, und das Druckmedium aus dem ersten Arbeitsraum 21 durch den ersten Kanal 71 und den zweiten Kanal 72 in den zweiten Arbeitsraum 22 strömt oder ob es aus dem zweiten Arbeitsraum 22 durch den dritten Kanal 73 und den vierten Kanal 74 in den ersten Arbeitsraum strömt, so fließt es doch in beiden Fällen im Bereich des Ventils 27 von dem ersten Druckanschluß 41 vorbei an dem Steuerkörper 40 und dem Anschlag 88 in den zweiten Druckanschluß 42. Dies wird bewirkt durch die Rückschlagventile 81, 82, 83, 84. Diese vier Rückschlagventile dienen somit zur Gleichrichtung des ersten Teilstromes des Druckmediums im Bereich des Ventils 27.

Der erste Druckanschluß 41 ist mit dem Druckraum 54 verbunden. In dem Druckraum 54 herrscht somit stets der gleiche Druck wie in dem ersten Druckanschluß 41. Der Druck in dem Druckraum 54 wirkt zum einen auf den inneren Ventilkörper 46 in axialer Richtung mit dem Bestreben, diesen Ventilkörper 46 mit seiner Stirnseite 63 gegen den Ventilsitz 47 zu drücken. Der Druck in dem Druckraum 54 wirkt aber auch auf die Wandung 62 d. h. auf eine der Stirnseite 65 gegenüberliegende Stirnfläche 93 des äußeren Ventilkörpers 49 in axialer Richtung und hat das Bestreben, die Stirnseite 65 des äußeren Ventilkörpers 49 gegen den Absatz 66 zu drücken.

Die zweite Strömungsverbindung 32 verbindet über das zweite Ventil 28 die beiden Arbeitsräume 21,22 und unterteilt sich in mehrere Abschnitte. Ausgehend vom ersten Arbeitsraum 21 kommt zuerst die erste Druckkammer 51, dann die zweite Druckkammer 52, die dann in den zweiten Arbeitsraum 22 führt. Die erste Druckkammer 51 ist mit dem ersten Arbeitsraum 21 verbunden. Damit wirkt ein Druck in dem ersten Arbeitsraum 21 auf den inneren Ventilkörper 46 in axialer Richtung mit dem Bestreben, diesen inneren Ventilkörper 46 von dem Ventilsitz 47 abzuheben. Die Kraft des Druckes in dem ersten Arbeitsraum 21 ist der Kraft des federnden Elements 56 und der Kraft des Druckes in dem Druckraum 54 entgegengerichtet.

In der zweiten Druckkammer 52 herrscht der gleiche Druck wie in dem zweiten Arbeitsraum 22. Der Druck in der zweiten Druckkammer 52 wirkt auf die Stirnseite 65 des äußeren Ventilkörpers 49 in axialer Richtung mit dem Bestreben, den äußeren Ventilkörper 49 von dem Absatz 66 abzuheben. Die Kraft der Druckes in der zweiten Druckkammer 52 auf den äußeren Ventilkörper 49 ist entgegengerichtet der Kraft des äußeren federnden Elements 57 und der Kraft des Druckes in dem Druckraum 54 auf die Stirnfläche 93 des äußeren Ventilkörpers 49.

Um einen Durchfluß des Druckmediums durch die zweite Strömungsverbindung 32 über das zweite Ventil 28 aus dem ersten Arbeitsraum 21 in den zweiten Arbeitsraum 22 zu ermöglichen, muß die Kraft des Druckes in der ersten Druckkammer 51 mindestens gleich groß sein wie die Kraft des Druckes in dem Druckraum 54 auf den inneren Ventilkörper 46 plus der Kraft des inneren federnden Elements 56. Damit das Druckmedium aus dem zweiten Arbeitsraum 22 durch die zweite Strömungsverbindung 32 und damit von der zweiten Druckkammer 52, durch das zweite Ventil 28, durch die Ventilöffnung 50 und durch den ersten Druckanschluß 51 in den ersten Arbeitsraum 21 strömen kann, muß die Kraft des Druckes in der zweiten Druckkammer 52 auf die Stirnseite 65 des äußeren Ventilkörpers 49 mindestens gleich groß sein, wie die Kraft des Druckes auf die Stirnfläche 93 des äußeren Ventilkörpers 49 in dem Druckraum 54 plus der Kraft des äußeren federnden Elements 57. Das heißt, daß das Druckmedium bei Strömung durch die zweite Strömungsverbindung 32 mindestens die Kraft des federnden Elements 56 bzw. des federnden Elements 57 überwinden muß. Da die federnden Elemente 56, 57 nicht beliebig schwach ausgeführt sein können, kann über die zweite Strömungsverbindung 32 nicht eine beliebig kleine Dämpfungskraft eingestellt werden; auch dann nicht, wenn der Druck in der Druckkammer 54 sehr weit abgesenkt wird.

Ein weiterer Kanal 104 zweigt von dem Kanal 77 ab und führt in den Bereich der Bohrung 86. Über diesen weiteren Kanal 104 ergibt sich ein zusätzlicher Strömungsweg 106 für das zwischem den Arbeitsräumen 21, 22 sich austauschende Druckmedium. An der Einmündung des Kanals 104 in die Bohrung 86 befindet sich eine Öffnung 110. Die Öffnung 110 ist durch den Kolben 43 schließbar bzw. öffenbar. Der zusätzliche Strömungsweg 106 führt aus dem ersten Arbeitsraum 21 durch den Kanal 71 bzw. aus dem zweiten Arbeitsraum 22 durch den Kanal 73, dann durch den weiteren Kanal 104 in die Bohrung 86 und von dort durch den Druckanschluß 42, dann durch den Kanal 72 in den zweiten Arbeitsraum 22 bzw. durch den Kanal 74 in den ersten Arbeitsraum 21. Je nach Stellung des Steuerkörpers 40 bzw. des Kolbens 43 ist der zusätzliche Strömungsweg 106 geschlossen oder geöffnet.

Der erfindungsgemäße Stoßdämpfer mit der Ventileinrichtung 24 kann auf zweierlei Weise arbeiten: Sind größere Dämpfungskräfte gewünscht, dann ist die Öffnung 110 durch den Steuerkörper 40 geschlossen. Bei gewünschten kleineren Dämpfungskräften hebt der Steuerkörper 40 relativ weit von dem Anschlag 88 ab und die Öffnung 110 ist mindestens teilweise geöffnet.

Für größere Dämpfungskräfte ist der zusätzliche Strömungsweg 106 geschlossen und der Stoßdämpfer arbeitet so wie es in der EP-A-364 757 ausführlich beschrieben ist. Deshalb kann für diesen Fall auf diese Schrift verwiesen werden. Das dort Geschriebene gilt in gleicher Weise auch für den Stoßdämpfer vorliegender Anmeldung. Der Steuerkörper 40 ist so demensioniert, daß bei größerer Stellkraft 102 die Öffnung 110 vom Kolben 43 verschlossen ist.

Bei gewünschten kleineren Dämpfungskräften wird die Magnetkraft der Magnetspule 36 so weit erniedrigt, daß die Feder 100 beziehungsweise der Druck im Druckanschluß 41 den Steuerkörper 40 so weit von dem Anschlag 88 abheben kann, daß auch die Öffnung 110 des zusätzlichen Strömungsweges 106 mindestens teilweise geöffnet ist.

Wäre der zusätzliche Strömungsweg 106 nicht vorhanden, so müßte auch bei gewünschten kleineren Dämpfungskräften, d. h. auch bei kleiner Stellkraft 102, das zwischen den Arbeitsräumen 21, 22 sich austauschende Druckmedium im wesentlichen über die zweite Strömungsverbindung 32 des zweiten Ventils 28 strömen, da, insbesondere wegen der Engstelle 34, durch die Strömungsverbindung 31 nur ein vernachlässigbar kleiner Teil des Druckmediumstroms strömen kann. Der durch die Strömungsverbindung 31 strömende Teilstrom ist sehr klein und dient nur zur Vorsteuerung des zweiten Ventils 28. Mit Blick auf die Dämpfungskraft kann der durch die erste Strömungsverbindung 31 strömende Teilstrom im wesentlichen vernachlässigt werden. Wie weiter vorne erklärt, ist, um die zweite Strömungsverbindung 32 zu öffnen, ein Mindestdruck erforderlich. Deshalb wäre, wenn der zusätzliche Strömungsweg 106 nicht vorhanden wäre, eine beliebige Absenkung der Dämpfungskraft nicht möglich.

Bei dem erfindungsgemäßen Stoßdämpfer mit dem zusätzlichen Strömungsweg 106 kann durch Erniedrigung der Stellkraft 102 der zusätzliche Strömungsweg 106 geöffnet werden, so daß, bei ausreichender Dimensionierung dieses Strömungsweges 106, auch außerordentlich kleine Dämpfungskräfte erzielbar sind. Weil bei größeren Dämpfungskräften der zusätzliche Strömungsweg 106 geschlossen ist, kann der zusätzliche Strömungsweg 106 ohne Schwierigkeiten nahezu beliebig groß dimensioniert werden.

Die Figur 2 zeigt ein weiteres, vorteilhaftes Ausführungsbeispiel des Stoßdämpfers.

In allen Figuren sind gleiche oder gleichwirkende Teile mit denselben Bezugzeichen versehen. Das zweite Ausführungsbeispiel ist weitgehend gleich aufgebaut wie das erste Ausführungsbeispiel, bis auf die nachfolgend im wesentlichen angegebenen Abweichungen. Einzelheiten der beiden Ausführungsbeispiele sind miteinander kombinierbar.

In Figur 2 ist zwischen den Abstufungen 92, 94 eine Eindrehung 112 vorgesehen. Ein Kanal 114 mündet einerseits in die Bohrung 86 und andererseits ohne eine Drosselstelle direkt in den zweiten Arbeitsraum 22. Die Öffnung 110 befindet sich an der Einmündung des Kanals 114 in die Bohrung 86. Ein anderer Kanal 115 mündet einerseits in den ersten Arbeitsraum 21 und andererseits in die Bohrung 86. Auch im Kanal 115 erfolgt keine Androsselung des Druckmediums. Die Eindrehung 112 ist so vorgesehen, daß die Einmündung des Kanals 115 in die Bohrung 86 stets im Bereich der Eindrehung 112 erfolgt, unabhängig von der Stellung des Kolbens 43. Die Einmündung des Kanals 114 in die Bohrung 86 erfolgt räumlich so, daß bei größerer Stellkraft 102 die Öffnung 110 durch den Kolben 43 verschlossen ist und bei kleinerer Stellkraft 102 ist die Öffnung 110 mindestens teilweise geöffnet. Der zusätzliche Strömungsweg 106 beinhaltet die Kanäle 114 und 115. Über den Strömungsweg 106 sind die beiden Arbeitsräume 21, 22 miteinander verbindbar.

Auch im zweiten Ausführungsbeispiel sorgt die Verbindungsbohrung 96 für einen Druckausgleich zwischen den beiden Abstufungen 92, 94; und der Druck in der Eindrehung 112 hat praktisch keinen Einfluß auf die Betätigungskraft des Steuerkörpers 40.

Auch beim zweiten Ausführungsbeispiel nach Figur 2 ist bei großer Stellkraft 102, das heißt bei gewünschter großer Dämpfungskraft, der zusätzliche Strömungsweg 106 geschlossen und der Stoßdämpfer arbeitet auch hier wie in der EP-A-364 757 beschrieben. Bei kleiner Stellkraft 102, das heißt bei kleiner gewünschter Dämpfungskraft, hat der Steuerkörper 40 so weit vom Anschlag 88 abgehoben, daß die Öffnung 110 im Verlauf des zusätzlichen Strömungsweges 106 mindestens teilweise geöffnet ist und das Druckmedium kann nahezu ungedrosselt zwischen den beiden Arbeitsräumen 21, 22 hin und her strömen, wodurch sich in vorteilhafter Weise eine besonders kleine, nahezu vernachlässigbare Dämpfungskraft erzielen läßt.

Im ersten und im zweiten Ausführungsbeispiel ist die minimal erzielbare Dämpfungskraft unabhängig vom zweiten Ventil 28, das heißt, insbesondere unabhängig von den federnden Elementen 56, 57. Im zweiten Ausführungsbeispiel nach Figur 2 ist die minimal erzielbare Dämpfungskraft darüberhinaus auch noch unabhängig von den Rückschlagventilen 81, 82, 83, 84.

Ein besonderer Vorteil ist beim zweiten Ausführungsbeispiel, daß es im Verlauf des freigebbaren Strömungsweges 106 keinen federvorgespannten Schließkörper gibt, dessen Vorspannkraft vom Druckmedium überwunden werden müßte. Im ersten Ausführungsbeispiel gibt es im Verlauf des Strömungsweges 106 nur die Rückschlagventile 81, 82, 83, 84 mit Schließkörpern. Da die Federvorspannung der Rückschlagventile 81, 82, 83, 84 normalerweise deutlich kleiner ist als die Federvorspannung der Ventilkörper 46, 49, kann durch Freigabe des zusätzlichen Strömungsweges 106 auch beim ersten Ausführungsbeispiel die Dämpfungskraft deutlich abgesenkt werden.

Bei eingestellten großen Dämpfungskräften wird die Dämpfungskraft durch die Stellkraft 102 bestimmt, denn wenn der Druck auf die Stirnseite 90 des Steuerkörpers 40 größer ist als die Stellkraft 102, dann öffnet das erste Ventil 27, so daß der Druck in der Druckkammer 54 nicht weiter ansteigen kann, wodurch auch das zweite Ventil 28 gerade so weit öffnen kann, daß die Dämpfungskraft gerade den gewünschten Wert hat, weitgehend unabhängig von z. B. der Relativgeschwindigkeit zwischen dem Mantelrohr 5 und dem Kolben 10, aber auch unabhängig von der Viskosität des Druckmediums. Die maximale Dämpfungskraft wird durch die maximal erzeugbare Stellkraft 102 bestimmt und kann auch im ungünstigsten Fall nicht überschritten werden.

Im Bereich kleiner Dämpfungskräfte wird die Dämpfungskraft von der Androsselung des Druckmediums im Bereich des zusätzlichen Strömungsweges 106 bestimmt. Da der Strömungsweg 106 nahezu beliebig groß gewählt werden kann, sind nahezu beliebig kleine Dämpfungskräfte erzielbar.

Besonders kleine Dämpfungskräfte sind im wesentlichen bei kleinen Relativgeschwindigkeiten zwischen Mantelrohr 5 und Kolben 10 gewünscht. Kleine Relativgeschwindigkeit bedeutet kleinen Druckmedium-Strom. Das heißt, daß es ausreichend ist, den zusätzlichen Strömungsweg 106 für einen kleinen Druckmedium-Strom zu dimensionieren. Deshalb sind kleine Querschnitte für den zusätzlichen Strömungsweg 106 ausreichend. Dies bedeutet, daß, wegen dem vorgeschlagenen Strömungsweg 106, der Stoßdämpfer nicht oder so gut wie nicht größer baut.

Für die Rückschlagventile 81, 82, 83, 84 gibt es mehrere bekannte Lösungen. Die Rückschlagventile bestehen in der Zeichnung beispielhaft im wesentlichen aus je einer Feder und je einer Kugel, wobei die Kugel durch die Feder gegen eine entsprechende Stufe des Kanals, in dem das Rückschlagventil eingebaut ist, gedrückt wird.

Die hydraulisch wirksame Querschnittsfläche des inneren Ventilkörpers 46 kann gleich, größer oder kleiner als die hydraulisch wirksame Querschnittsfläche der Wandung 62 des äußeren Ventilkörpers 49 sein. Auch die Kraft des inneren federnden Elementes 56 muß nicht gleich der Kraft des äußeren federnden Elementes 57 sein.

In einer möglichen Ausführungsvariante kann das Ventil 27 auch so ausgebildet sein, daß die Kraft einer in der Zeichnung nur gestrichelt angedeuteten Feder 116 auf den Steuerkörper 40 in Schließrichtung wirkt. Diese Feder 116 ist eine relativ starke Feder und in diesem Fall muß die Magnetkraft der Magnetspule 36 in Richtung Öffnen des Ventils 27 wirken. Bei dieser Ausführungsvariante mit der Feder 116 kann die Feder 100 entfallen, und die Stellkraft 102 zur Betätigung des Steuerkörpers 40 ergibt sich aus der Kraft der Feder 116 abzüglich der Magnetkraft. Diese Variante hat die Besonderheit, daß bei Ausfall der Magnetkraft die maximale Dämpfung eingestellt wird. Dies kann im Falle eines Defektes gegebenenfalls Vorteile bieten.

Als Ausführungsbeispiel wurde für den erfindungsgemäßen Stoßdämpfer ein Einrohr-Stoßdämpfer gewählt. Dies ist jedoch nur beispielhaft. Der Stoßdämpfer könnte genau so gut z. B. ein sogenannter Zweirohr-Stoßdämpfer sein.

Die Ventileinrichtung 24 kann, wie in der Zeichnung dargestellt, innerhalb des Kolbens 10 vorgesehen sein, sie kann aber auch z. B. an einer Außenfläche des Mantelrohres 5 angeordnet sein oder aber auch in oder an einem sonstigen Trennkolben innerhalb des Zylinders.

In dem Gehäuse 25 können bei Bedarf die Arbeiträume 21, 22 über einen weiteren, in der Figur 1 gestrichelt gezeichneten Durchlaß 118 oder mehrere Durchlässe 118, ggf. mit Strömungsblenden 119, verbunden sein. Dieser Durchlaß 118 ist wegen der Vielseitigkeit der Ventileinrichtung 24 jedoch an sich entbehrlich.

Anstatt der beiden Ventilkörper 46, 49, kann auch, wie in der EP-A-364 757 in Figur 2 dargestellt, im zweiten Ventil 28 auch nur ein einziger abgestuft ausgeführter Ventilkörper verwendet werden. In diesem Fall ist selbstverständlich eines der federnden Elemente 56, 57 ausreichend.

In den Ausführungsbeispielen vorliegender Anmeldung sind die Ventilkörper 46, 49 in etwa zylindrisch ausgeführte Kolben. Es ist auch möglich, die Ventilkörper 46, 49, wie in der EP-A-400 395 beschrieben und dargestellt, in Form zum Beispiel einer Membrane auszubilden.

In vorliegender Anmeldung sind die federnden Elemente 56, 57 zwei schraubenartig geformte Druckfedern. Sind die Ventilkörper 46, 49 Membranen, so ist es möglich, der Eigenfederung der Membrane die Funktion der federnden Elemente 56, 57 zuzuweisen und auf separate Federn zu verzichten.

Bei dem hier vorgestellten Stoßdämpfer kann mit dem Ventil 27 vorteilhafterweise ohne irgendwelche Einschränkung die Dämpfungskraft des Stoßdämpfers auf bekannte Weise gesteuert werden. Die vorliegende Anmeldung zeigt darüber hinaus jedoch noch die Möglichkeit des zusätzlichen Strömungswegs 106, durch den es möglich ist, bei Verringerung der Stellkraft 102 den durch das Ventil 27 führenden zusätzlichen Strömungsweg 106 freizugeben.

Bei Verringerung der Stellkraft 102 wird auf vorteilhafte Weise die Öffnung 110 im Verlauf des zusätzlichen Strömungswegs 106 durch den Steuerkörper 40 freigegeben.

In den dargestellten Ausführungsbeispielen dient die Strömungsverbindung 31 als Vorsteuerstufe für die zweite Strömungsverbindung 32. Je nach gewünschten Dämpfungskräften und je nach Möglichkeiten zur Erzeugung der Stellkraft 102 kann gegebenenfalls auch auf die zweite Strömungsverbindung 32 verzichtet werden und die Dämpfungskraft kann gegebenenfalls allein mit dem Ventil 27 direkt gesteuert werden.

In den dargestellten Ausführungsbeispielen umfaßt das zweite Ventil 28 sogenannten Sitzventile. Selbstverständlich können hier auch sogenannte Schieberventile verwendet werden.

Die meist schwach ausgeführte Feder 100 dient im wesentlichen zur Überwindung von Reibkräften zwischen dem Steuerkörper 40 und dem Gehäuse 25. Mit Hilfe der Feder 100 läßt sich die Dämpfungskraft besonders weit absenken. Die Feder 100 dient zur Freigabe des zusätzlichen Strömungsweges 106 bei unbestromter Magnetspule 36. Insbesondere wenn sich der Stoßdämpfer in der in der Zeichnung dargestellten Einbaulage befindet, wirkt die Feder 100 dem Gewicht des Steuerkörpers 40 entgegen und sorgt damit für einwandfreie Freigabe des zusätzlichen Strömungsweges 106. Je nach Bedarf kann gegebenenfalls die Feder 100 entfallen; allerdings läßt sich dann die Dämpfungskraft eventuell nicht ganz so weit absenken. Ist der Stoßdämpfer oder das Ventil 27 gegenüber der dargestellen Einbaulage um 180° verdreht eingebaut, dann ist die Feder 100 eher entbehrlich.

In dem dargestellten Ausführungsbeispiel ist das Ventil 27 der Ventileinrichtung 24 ein Sitzventil, und der Anschlag 88 ist ein Ventilsitz des Sitzventils. Es ist auch möglich, das Ventil 27 in Form eines Wegeventils auszubilden. Bei dieser Variante ist der Steuerkörper 40 ein Steuerschieber, und der Anschlag 88 fällt nicht zusammen mit einer Steuerkante, an der das vom ersten Druckanschluß 41 zum zweiten Druckanschluß 42 strömende Druckmedium gesteuert wird. Da es dem Fachmann ein Leichtes ist, das Ventil 27 in Form eines Wegeventil auszubilden anstatt als Sitzventil, wird auf eine bildliche Darstellung dieser Variante verzichtet.

**Patentansprüche**

1. Stoßdämpfer, insbesondere für Fahrzeuge, mit einem in einem Zylinder verschiebbaren, diesen in einen ersten Arbeitsraum und in einen zweiten Arbeitsraum unterteilenden Kolben, wobei der Zylinder und der Kolben an jeweils einer Masse angelenkt sind, sowie mit einer einen Druck eines Druckmediums bestimmenden Ventileinrichtung mit einem Steuerkörper (40) und einem Ansschlag (88), wobei der Steuerkörper von einer Stellkraft gegen den Anschlag verstellbar ist zwecks Androsselung des durch eine Strömungsverbindung strömenden Druckmediums, dadurch gekennzeichnet, daß ein zusätzlicher Strömungsweg (106) bei Verringerung der Stellkraft durch den Steuerkorper (40) freigebbar ist.

2. Stoßdämpfer nach Anspruch 1, dadurch gekennzeichnet, daß bei Verringerung der Stellkraft der Steuerkörper (40) eine Öffnung (110) im Verlauf des zusätzlichen Strömungsweges (106) öffnet.

3. Stoßdämpfer nach Anspruch 1 oder 2, dadurch gekennzeichnet, daß die Strömungsverbindung (31) zur Steuerung einer zweiten Strömungsverbindung (32) dient.

4. Stoßdämpfer nach Anspruch 3, dadurch gekennzeichnet, daß im Verlauf der zweiten Strömungsverbindung (32) mindestens ein Ventilkörper (46, 49) und mindestens ein federndes Element (56, 57) vorgesehen sind, wobei das federnde Element (56, 57) den Ventilkörper (46, 49) in eine die zweite Strömungsverbindung (32) schließende Richtung beaufschlagt.

5. Stoßdämpfer nach einem der vorhergehenden Ansprüche, dadurch gekennzeichnet, daß bei freigegebenem zusätzlichem Strömungsweg (106) im Verlauf des zusätzlichen Strömungsweges (106) praktisch keine Androsselung des Druckmediums erfolgt.

6. Stoßdämpfer nach einem der vorhergehenden Ansprüche, dadurch gekennzeichnet, daß die Ventileinrichtung (24) ein Sitzventil umfaßt und der Anschlag (88) ein Ventilsitz dieses Sitzventils ist.

FIG.1

FIG.2